(19) Europäisches Patentamt
European Patent Office
Office européen des brevets

(11) EP 2 086 274 A2

(12) **EUROPEAN PATENT APPLICATION**

(43) Date of publication:
05.08.2009 Bulletin 2009/32

(51) Int Cl.:
*H04W 72/08* (2009.01)   *H04W 16/12* (2009.01)

(21) Application number: 08164948.5

(22) Date of filing: 23.09.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 04.02.2008 JP 2008024283

(71) Applicant: Fujitsu Ltd.
Kawasaki-shi, Kanagawa 211-8588 (JP)

(72) Inventor: Oota, Yoshiyuki
Kawasaki-shi, Kanagawa 211-8588 (JP)

(74) Representative: Wilding, Frances Ward
Haseltine Lake LLP
Lincoln House, 5th Floor
300 High Holborn
London WC1V 7JH (GB)

(54) **Selection of frequency reuse based on the transmission of known sequences**

(57) Method for choosing the frequency reuse for transmission to a mobile station based on reception quality measurements of known transmission sequences.

A disclosed base station transmits data at the same frequency used by neighboring base stations during a first time period (T1+T2), and transmits data at a different frequency from those used by the neighboring base stations during a second time period (T3-1+T3-2). The base station includes an antenna; and a transmitting unit configured to transmit a first known sequence from the antenna during a first time period (T1) and transmit a second known sequence from the antenna during a second time period (T3-2).

FIG.5A

FRAME MAPPING OF BS1

**Description**

CROSS-REFERENCE TO RELATED APPLICATIONS

This application is based upon and claims the benefit of priority of the prior Japanese Patent Application 2008-024283, filed on February 4, 2008, the entire contents of which are incorporated herein by reference.

FIELD

The disclosures herein are directed to a base station and a known sequence transmitting method.

BACKGROUND

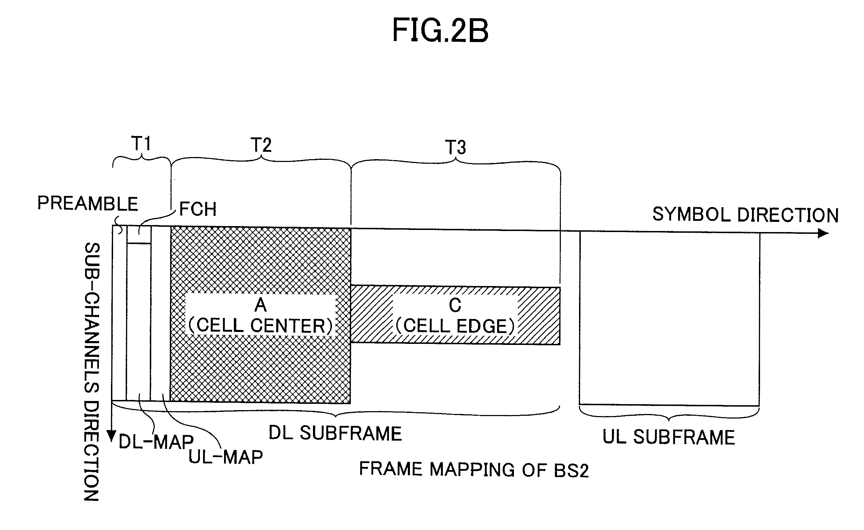

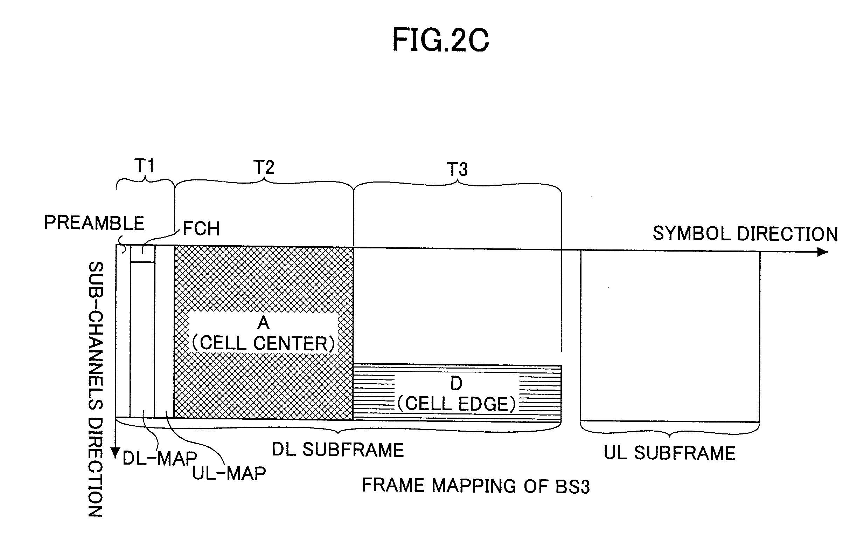

Wireless communications systems for transmitting different data in different time periods have been known.
One example of such is an OFDMA (Orthogonal Frequency Division Multiplex Access) wireless communications system which employs FFR (Fractional Frequency Reuse). For the communication, WiMAX technology may be used.
In WiMAX, control signals including a preamble are placed at the beginning of a wireless frame, and are transmitted from a base station with relatively high power so as to reach across the entire cell of the base station.

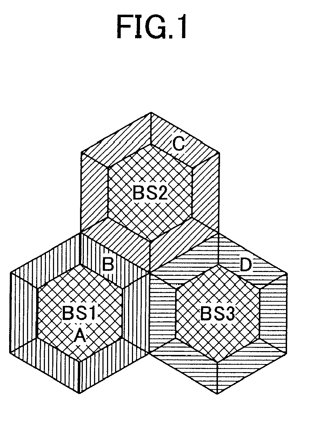

FIG. 1 is a schematic diagram showing cells of three base stations BS1 through BS3 in conventional OFDMA communications employing FFR.
According to an example depicted in FIG. 1, in all the base stations (hereinafter sometimes abbreviated to "BS"), the same frequency band A is allocated for mobile stations located close to the center of each cell (i.e. the reuse factor RF = 1) while three different frequency bands B, C and D are allocated for mobile stations located in the edges of the respective cells (i.e. the reuse factor RF = 3).

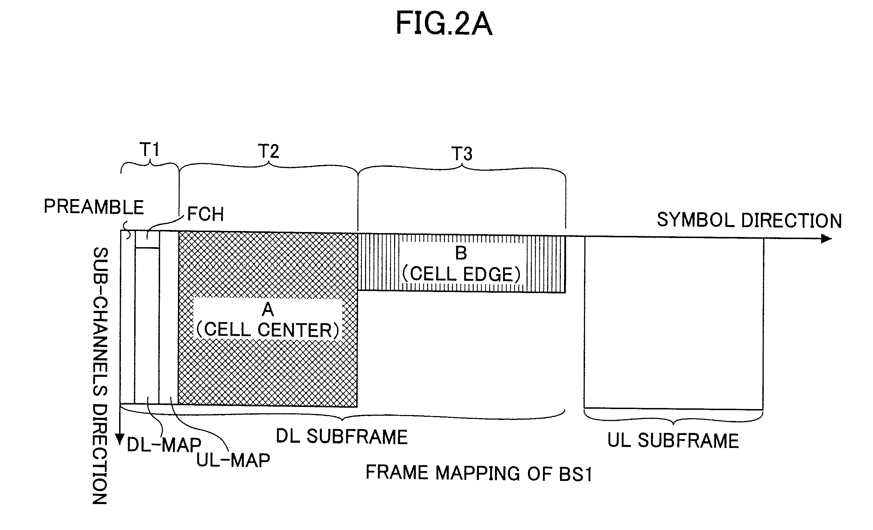

FIGs. 2A through 2C show an example of frame mapping of a wireless frame used in this case. The horizontal axis representing the OFDMA symbol direction also represents the time axis.
In each of FIGs. 2A, 2B and 2C, T2 is a zone (time period) for transmitting data when RF = 1, and T3 is a zone (time period) for transmitting data when RF = 3.
With reference to FIG. 2A which shows frame mapping of the base station BS1, a DL (DownLink) sub-frame is followed by an UL (Up-Link) sub-frame. Within the DL sub-frame, control signals including a preamble (specifically, preamble, DL-MAP, UL-MAP and FCH) are provided in T1 at the beginning of the wireless frame, which are followed by T2 during which actual data are transmitted with RF = 1, which is then followed by T3 during which actual data are transmitted with RF = 3.
Within the DL sub-frame in FIG. 2A, T2 is a zone dedicated to data transmission to mobile stations close to the cell center of the base station BS1, and T3 is a zone dedicated to data transmission to mobile stations near the cell edge of the base station BS1. As illustrated in FIG. 2A, a full range of all available sub-channels (a frequency band A in FIG. 2A) are used in T2 (i.e. zone of RF = 1) for the cell center. On the other hand, one third of all the sub-channels (a frequency band B) is used in T3 (i.e. zone of RF = 3) for the cell edge.
Similarly, in FIG. 2B, within the DL sub-frame of the base station BS2, T2 is a zone dedicated to data transmission to mobile stations close to the cell center of the base station BS2, and T3 is a zone dedicated to data transmission to mobile stations near the cell edge of the base station BS2. As illustrated in FIG. 2B, a full range of all available sub-channels (the frequency band A in FIG. 2B) is used in T2 (i.e. zone of RF = 1) for the cell center. On the other hand, one third of all the sub-channels (a frequency band C), which is different from the frequency band B in FIG. 2A, is used in T3 (i.e. zone of RF = 3) for the cell edge.
Similarly, in FIG. 2C, within the DL sub-frame of the base station BS3, T2 is a zone dedicated to data transmission to mobile stations close to the cell center of the base station BS3, and T3 is a zone dedicated to data transmission to mobile stations near the cell edge of the base station BS3. As illustrated in FIG. 2C, a full range of all available sub-channels (the frequency band A in FIG. 2C) are used in T2 (i.e. zone of RF = 1) for the cell center. On the other hand, one third of all the sub-channels (a frequency band D), which is different from the frequency band B in FIG. 2A and the frequency band C in FIG. 2B, is used in T3 (i.e. zone of RF = 3) for the cell edge.
That is to say, according to the example of FIGs. 2A-2C, the base stations BS1, BS2 and BS3 use the same frequency band A for mobile stations in the respective cell centers, and use a different one-third (B, C and D) of the frequency band A for mobile stations in their cell edges.
In the example of the conventional technology depicted in FIGs. 2A-2C, the control signals including a preamble are provided only at the beginning of the DL sub-frame (T1 in FIGs. 2A-2C). When a mobile station receives a wireless frame having such a structure from a base station, the mobile station measures a CINR (Carrier to Interference and Noise Ratio) from the preamble and then transmits the measurement result to the base station.
Then, based on the CINR value fed back from the mobile station, the base station determines to assign the mobile station to either the zone of RF = 1 (i.e. T2 in FIGs. 2A-2C) or the zone of RF = 3 (i.e. T3). The base station also determines an applicable MCS (Modulation and Channel coding Scheme) for the mobile station.

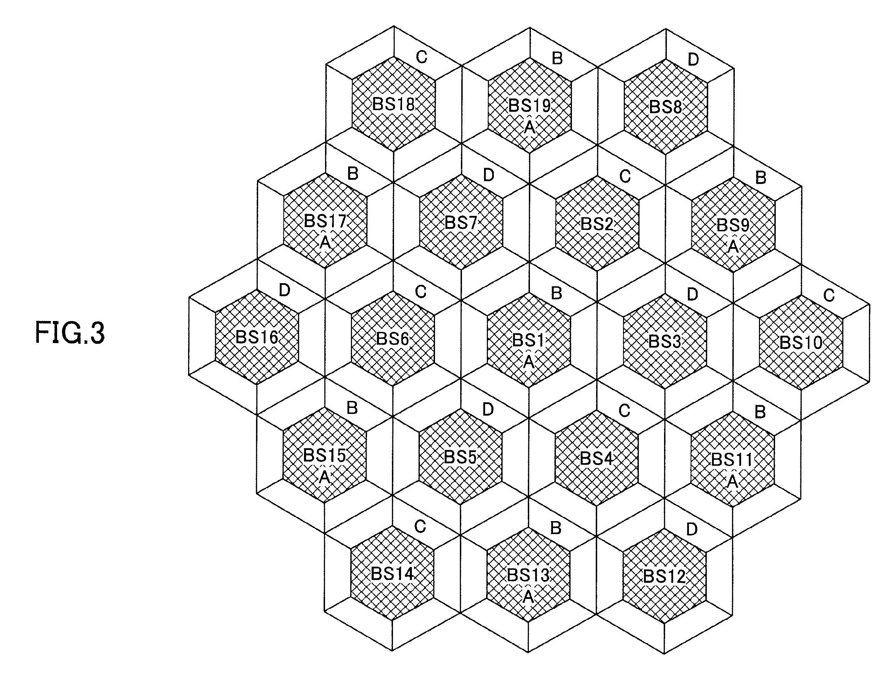

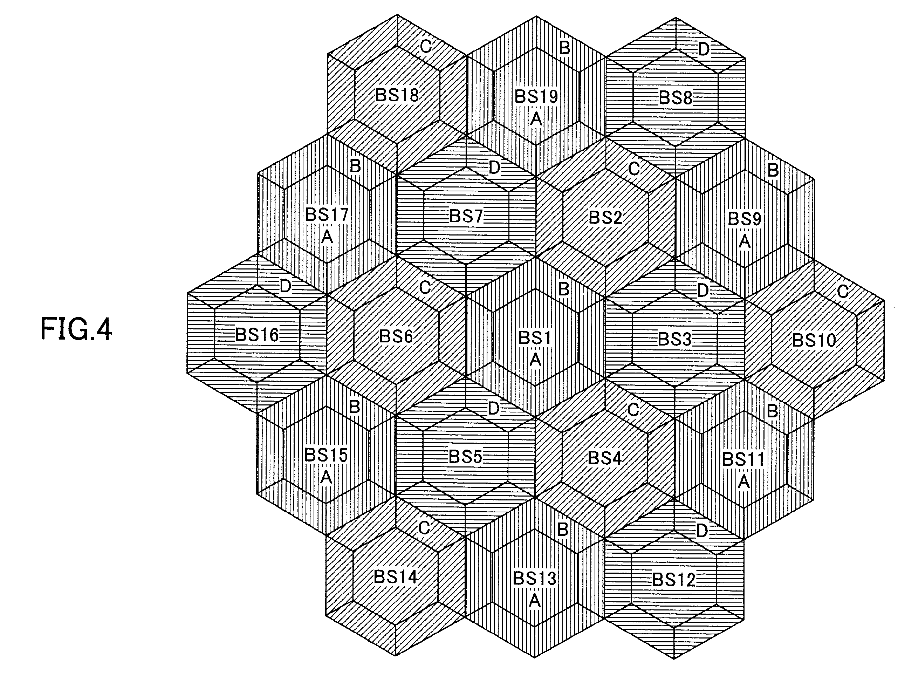

Note that FIGs. 3 and 4 visually show locations of mobile stations performing wireless communications in T2 and T3, respectively.

Patent Document 1: Japanese Laid-open Patent Application Publication No. H10-186944

Patent Document 2: Japanese Laid-open Patent Application Publication No. 2006-74325

However, during T2 and T3, a mobile station located within the cell of a given base station may experience different levels of interference caused by signals transmitted by neighboring base stations.

That is, during T2, neighboring base stations also transmit wireless signals in the same frequency band; during T3, however, the given base station and its neighboring base stations transmit wireless signals in different frequency bands, not sharing the same frequency band. Accordingly, the mobile station may be subject to stronger interference during T2, as compared to during T3.

In view of the above-mentioned problem, there is a need to provide a base station and a known sequence transmitting method that take into account transmission conditions of neighboring base stations.

SUMMARY

According to an embodiment, a base station for transmitting data at the same frequency as that used by neighboring base stations during a first time period, and transmitting data at a different frequency from those used by the neighboring base stations during a second time period, includes a transmitting unit configured to transmit a first known sequence during the first time period and transmit a second known sequence during the second time period.

Additional objects and advantages of the embodiment will be set forth in part in the description which follows, and in part will be obvious from the description, or may be learned by practice of the invention. The object and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

BRIEF DESCRIPTION OF DRAWINGS

FIG. 1 is a schematic diagram showing an example of use of frequencies by three base stations BS1 through BS3 in conventional OFDMA communications which employ FFR;

FIGs. 2A through 2C show an example of frame mapping in the case of employing a conventional FFR method;

FIG. 3 shows an example of wireless transmission which employs FFR when RF = 1;

FIG. 4 shows an example of wireless transmission which employs FFR when RF = 3;

FIGs. 5A through 5C show frame mapping according to a first embodiment;

FIG. 6 is an example of a correspondence table between CINRs and MCSs for RF = 1;

FIG. 7 is an example of a correspondence table between CINRs and MCSs for RF = 3;

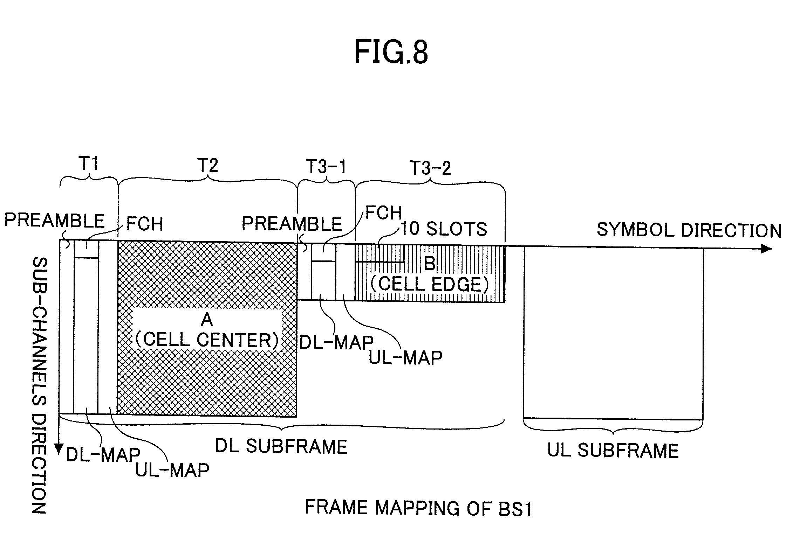

FIG. 8 shows a position of ten slots within a wireless frame in the case where the ten slots were transmitted in simulation;

FIG. 9 shows an example of results of the simulation;

FIG. 10A is a functional block diagram showing a structural example of a base station used to implement one embodiment of the present disclosure;

FIG. 10B is a hardware block diagram showing a structural example of a base station used to implement one embodiment of the present disclosure;

FIG. 11A is a functional block diagram showing a structural example of a mobile station used to implement one embodiment of the present disclosure;

FIG. 11B is a hardware block diagram showing a structural example of a mobile station used to implement one embodiment of the present disclosure;

FIG. 12 is a flowchart of operation of the base station and the mobile station used to implement one embodiment of the present disclosure;

FIGs. 13A through 13C are diagrams for explaining a second embodiment;

FIG. 14 is a diagram for explaining a third embodiment; and

FIG. 15 is a diagram for explaining a fourth embodiment.

DESCRIPTION OF EMBODIMENT

The following embodiments relate to a base station for transmitting data at the same frequency as that used by neighboring base stations during a first time period, and transmitting data at a different frequency from those used by the neighboring base stations during a second time period, the base station including a transmitting unit configured to transmit a first known sequence during the first time period and transmit a second known sequence during the second time period.

Since the first known sequence is transmitted during the first time period and the second known sequence is transmitted during the second time period, a mobile station located within the cell of the base station is able to measure reception quality of the first known sequence to thereby measure the reception environment for the first time period as well as measure reception quality of the second known sequence to thereby measure the reception environment for the second time period. Thus, transmitting the first and second known sequences has great significance.

Based on the measured reception environments, the mobile station may determine whether it is more desirable to receive data in the first time period or in the second time period. As a matter of course, the measurement results may be sent (reported) to the base station, and the base station may determine to transmit data to the mobile station during the first time period or the second time period. At the time of reporting the measurement results, simply the measurement results as they stand may be transmitted to the base station. Alternatively, of the two time periods, a more desirable one for data transmission (the desirability is evaluated in terms of, for example, throughput and whether an applicable MCS or the like operates at high speeds) is selected based on the measurement results, and the selected time period may be reported as the measurement results.

Each of the first time period and the second time period may include multiple temporally-separated time periods.

The first known sequence is preferably transmitted in all or part of the frequency band used for data transmission during the first time period. Also, the second known sequence is preferably transmitted in all or part of the frequency band used for data transmission during the second time period. The frequency band used for transmitting the first known sequence may be wider than the frequency band used for transmitting the second known sequence.

The following explains a WiMAX wireless communications system employing FFR.

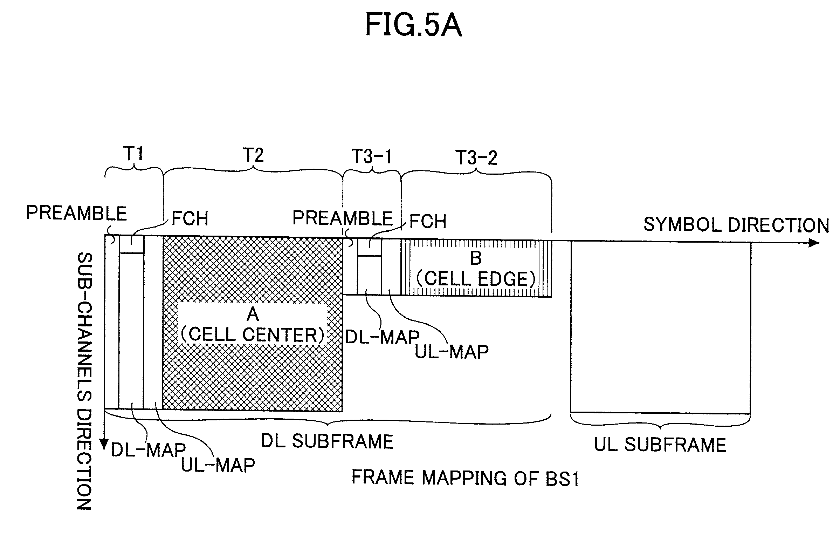

FIGs. 5A through 5C show frame mapping of a wireless frame according to a first embodiment of the present disclosure. The horizontal axis representing the OFDMA symbol direction also represents the time axis.

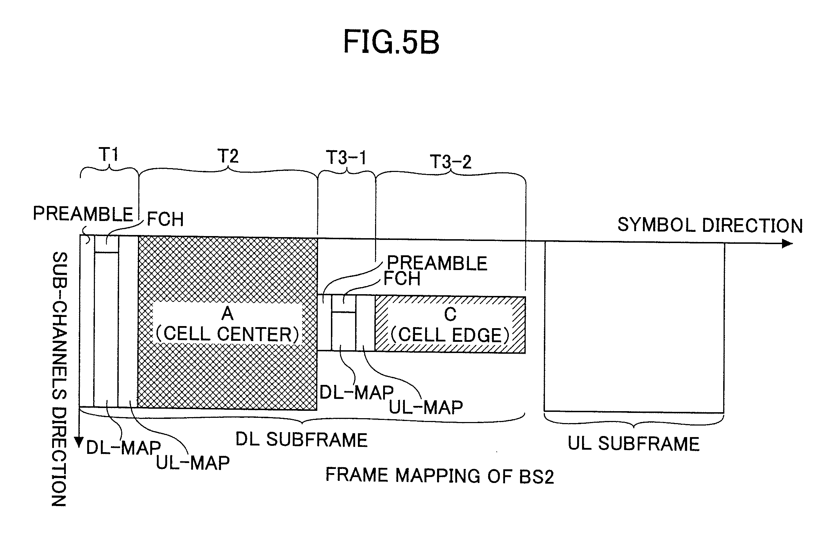

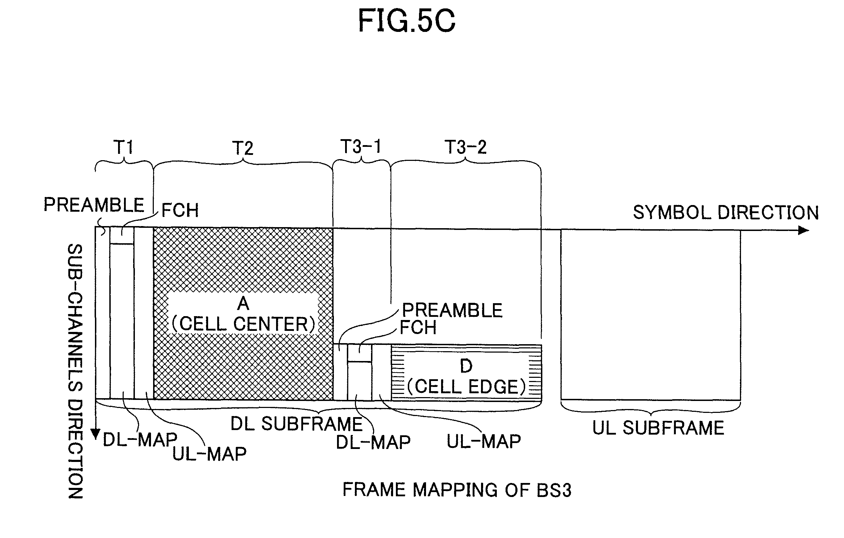

In each of FIGs. 5A, 5B and 5C, T2 is a zone for transmitting data when RF = 1, during which data are transmitted to mobile stations. T3-2 is a zone for transmitting data when RF = 3, during which data are transmitted with respect to each mobile station. As a matter of course, the data may be multicast data transmitted to multiple mobile stations.

With reference to FIG. 5A which shows frame mapping of the base station BS1, a DL sub-frame is followed by an UL sub-frame. Within the DL sub-frame, a preamble serving as a known sequence and control signals (DL-MAP, UL-MAP and FCH) are placed in T1 at the beginning of the wireless frame, which is followed by T2. Then, a preamble serving as a known sequence and control signals (DL-MAP, UL-MAP and FCH) are placed in T3-1, which is followed by T3-2.

After the UL sub-frame, a signal corresponding to the next frame is transmitted, and the signal may take the same format, i.e. T1, T2, T3-1, T3-2 and UL sub-frame. Thus, after the first frame, subsequent data may be sequentially transmitted using such a frame structure.

Within the DL sub-frame in FIG. 5A, T2 is a zone dedicated for transmitting data to mobile stations close to the cell center of the base station BS1 when RF = 1, and T3-2 is a zone dedicated for transmitting data to mobile stations near the cell edge of the base station BS1 when RF = 3. As illustrated in FIG. 5A, data transmission using the full range of all available sub-channels (a frequency band A in FIG. 5A) is allowed during T2 dedicated to the cell center. On the other hand, data transmission using one-third of all the sub-channels (a frequency band B) is allowed during T3-2 dedicated to the cell edge. The frequency band A is wider than the frequency band B.

T1 and T2 are zones during which transmission at the same frequency used by neighboring base stations is allowed. T1 and T2 together may be referred to as a first time period during which transmission is made at the same frequency as that used by neighboring base stations. On the other hand, T3-1 and T3-2 are zones during which transmission at a different frequency from those used by neighboring base stations is allowed. T3-1 and T3-2 together may be referred to as a second time period during which transmission is made at a different frequency from those used by neighboring base stations. Note that, even if T1 and T2 are temporally separated from each other, these two together can be referred to as the first time period. Likewise, even if T3-1 and T3-2 are temporally separated from each other, these two together can be referred to as the second time period.

Similarly, within the DL sub-frame in FIG. 5B, T2 is a zone dedicated for transmitting data to mobile stations close to the cell center of the base station BS2 when RF = 1, and T3-2 is a zone dedicated for transmitting data to mobile stations near the cell edge of the base station BS2 when RF = 3. During T2, data transmission using the frequency band A is allowed; and during T3-2, data transmission using the frequency band C, which is one third of the frequency band A, is allowed. Note that the frequency band C is different from the frequency band B used by the base station BS1 in FIG. 5A, and these two bands do not share any frequencies.

Similarly, within the DL sub-frame in FIG. 5C, T2 is a zone dedicated for transmitting data to mobile stations close to the cell center of the base station BS3 when RF = 1, and T3-2 is a zone dedicated for transmitting data to mobile stations near the cell edge of the base station BS3 when RF = 3. As illustrated in FIG. 5C, data transmission using the frequency band A is allowed during T2 dedicated to the cell center; data transmission using the frequency band D, which is one third of the frequency band A, is allowed during T3-2 dedicated to the cell edge. Note that the frequency band D is different from the frequency band B used by the base station BS1 in FIG. 5A and the frequency band C used by the base station BS2 in FIG. 5B, and these three bands do not share any frequencies.

That is to say, according to the example of FIGs. 5A-5C, the base stations BS1, BS2 and BS3 use the same frequency band A for mobile stations in the respective cell centers, and use a different one-third (B, C and D) of the frequency band A for mobile stations in their cell edges.

As illustrated in FIGs. 5A through 5C, according to the present embodiment, the preamble for RF = 1 (first known sequence) is placed at the beginning of the DL sub-frame (in T1 in FIGs. 5A-5C), and the preamble for RF = 3 (second known sequence) is placed in T3-1 of the DL sub-frame. When a mobile station receives a wireless frame having such a structure, the mobile station may measure CINRs from both preambles for RF = 1 and RF = 3 and feed back the results to the base station. Alternatively, the mobile station may transmit to the base station measurement result information that specifies a zone for data transmission corresponding to a comparatively better one of the measured CINRs.

Multiple base stations may start T1 and T3-1 in sync with each other, and may end T2 and T3-2 out of synch with each other. By synchronizing the timings, it is possible to avoid T2 of one base station from temporally overlapping T3-1 of another base station.

As illustrated in FIGs. 5A-5C, the control signals including the preamble for RF = 1 placed in T1 are transmitted using the full range of all available frequency band A, as in the case of a data burst in T2. Also, these control signals may be transmitted with the same transmission power as is used in T2. Similarly, the control signals including the preamble for RF = 3 placed in T3-1 are transmitted using one third (B, C or D) of the full range of all available frequency band A, as in the case of a data burst in T3-2. Also, these control signals may be transmitted with the same transmission power as is used in T3-2. Note that the known sequence (preamble) transmitted in T1 does not have to be transmitted at all the same frequencies used for the data transmission in T2, and the same is true for T3-1 and T3-2. The known sequence may be transmitted at frequencies created by skipping some frequencies from the frequencies for T2 or T3-2 based on predetermined rules. As to the frequencies used for transmission, each mobile station or base station may estimate the reception quality by interpolation.

As has been described above, the control signals (including a preamble) for RF = 1 are (possibly) transmitted during T1 at the same frequencies as those used by neighboring base stations, as in the case of the data burst in T2. Accordingly, it can be said that the preamble in T1 and the data burst in T2 when RF = 1 are transmitted under relatively similar transmission conditions. That is, in terms of making transmission in the same frequency band as that used by neighboring base stations, T1 and T2 have similar transmission conditions. In the same way, the control signals for RF = 3 are transmitted during T3-1 under similar transmission conditions to that for those data burst during T3-2 when RF = 3. That is, in terms of making transmissions at a different frequency band from that used by neighboring base stations, T3-1 and T3-2 have similar transmission conditions. Therefore, the reception quality (e.g. CINR and reception level) measured from the preamble included in the control signals for RF = 1 is likely to be similar to the reception quality obtained for the data burst when RF = 1. In the same way, the reception quality (e.g. CINR) measured from the preamble included in the control signals for RF = 3 is likely to be similar to the reception quality obtained for the data burst when RF = 3. The base station may receive as feedback the reception quality obtained by the mobile station. Based on the transmitted results (CINRs) of the reception quality measured from both preambles for RF = 1 and RF = 3, the base station (control unit) may determine to assign the mobile station to either the zone of RF = 1 (i.e. T2 in FIGs. 5A-5C) or the zone of RF = 3 (i.e. T3-2). The base station may also determine which MCS is to be applied for the mobile station.

In addition, as illustrated in FIGs. 5A-5C, the control signals other than the preamble (i.e. FCH, DL-MAP and UL-MAP) are also transmitted in respective zones of RF = 1 and RF = 3. That is, the control signals including FCH, DL-MAP and UL-MAP in addition to the preamble are transmitted in the zone of RF = 1, namely T1, and also transmitted in the zone of RF = 3, namely T3-1.

Note that DL-MAP transmitted in T1 defines a transmission format of data to be transmitted in T2 and a transmission timing; and DL-MAP transmitted in T3-1 defines a transmission format of data to be transmitted in T3-2 and a transmission timing.

Next are briefly described effects obtained by implementing the above mentioned structure in the first embodiment.

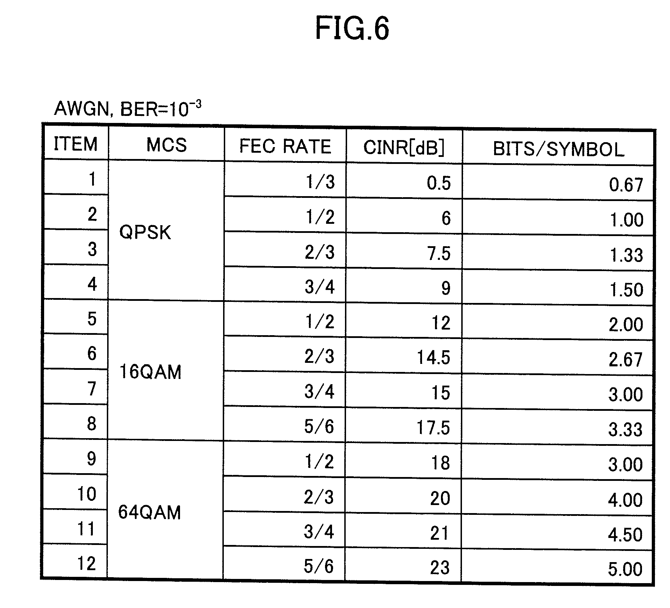

FIG. 6 shows correspondence between CINRs and MCSs under a non-fading environment (that is, an environment in which a mobile station is fixed, and which is hereinafter simply referred to as "AWGN environment") in the zone of RF = 1. According to the correspondence, in a propagation environment where the CINR is, for example, between 0.5 dB and 5 dB, QPSK (1/3) is employed as an MCS.

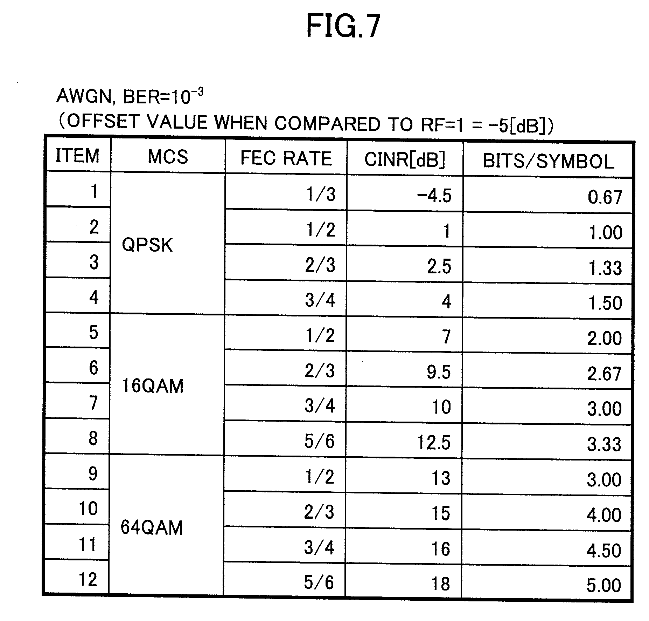

FIG. 7 shows correspondence between CINRs and MCSs under the AWGN environment in the zone of RF = 3. As described above with reference to FIG. 4, in the zone of RF = 3, base stations transmitting in the same frequency band B (likewise C and D) are located far from each other, and therefore, the interference is considered to be relatively reduced as compared to when RF = 1. Accordingly, as compared to when RF = 1, a higher level of MCS can be applied to the same CINR when RF = 3.

Assume that the difference in CINRs between RF = 1 and RF = 3 is -5 dB (see FIG. 7). That is, in a propagation environment where the CINR is, for example, between -4.5 dB and 0 dB, QPSK (1/3) is employed as an MCS when RF = 3, as seen from FIG. 7. As described above, when RF = 1, the same QPSK (1/3) is employed as an MCS with respect to the propagation environment whose CINR is between 0.5 dB and 5 dB. Thus, when RF = 3 as compared to when RF = 1, the same MCS is applied to a lower level of CINR.

Assume here that a mobile station is assigned to the zone of RF = 3. The following describes how to determine an applicable MCS in this case.

As illustrated in FIGs. 5A-5C, the preamble for RF = 3 is provided in the time period of T3-1, and it is possible to determine an appropriate MCR for this mobile station, in the correspondence of FIG. 7 using the CINR measured from the preamble for RF = 3.

As described above with reference to FIGs. 3 and 4, the propagation environments are different between transmission in the zone of RF = 1 and the zone of RF = 3. Therefore, in the case of assigning a mobile station to the zone of RF = 3, a more appropriate MCS can be determined using the CINR measured from the preamble for RF = 3 (i.e. the preamble in T3-1 in FIGs. 5A-5C).

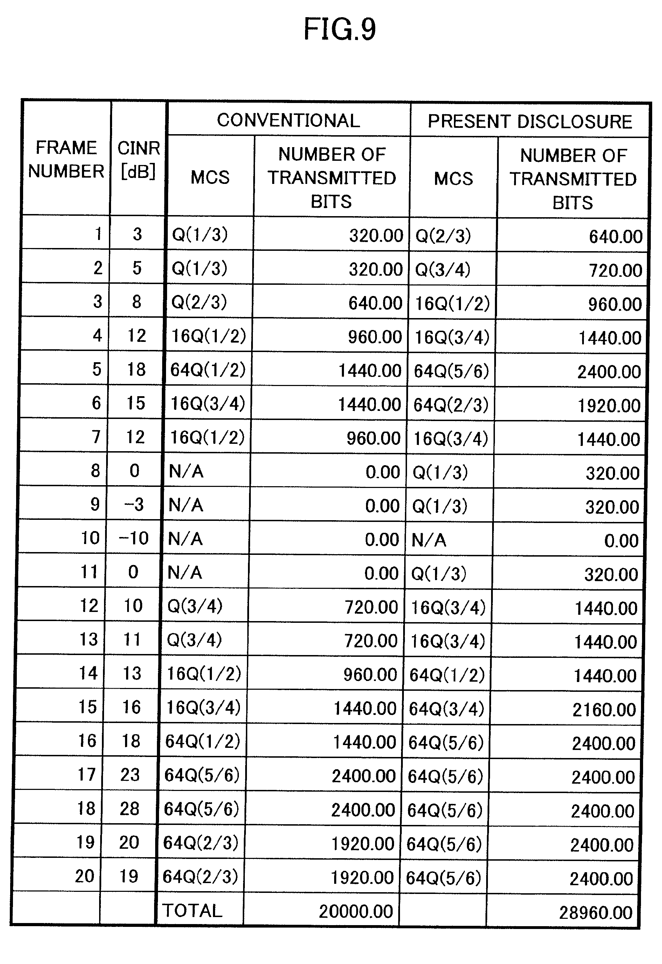

Now assume that a mobile station is assigned to the zone of RF = 3 (i.e. T3-2) and ten slots in T3-2 are allocated to the mobile station for twenty successive frames. FIG. 9 shows the amount of data transmission in this case calculated by simulation.

Further assume that the CINR value changes continuously for the twenty frames, for example, 3 dB in the frame number 1, 5 dB in the frame number 2 and so on. The simulation conditions are that a ratio of RF = 1 and RF = 3 for transmitting ten slots is 1:1, and the number of transmitted symbols for 10 slots is 480 symbols, calculated from the following equation:

$$10 \ (slots) \ \times \ 24 \ (sub\text{-}channels) \ \times \ 2 \ (symbols) \ = \ 480 \ (symbols).$$

In this case, according to the conventional technology described above with reference to FIG. 2, an MCS derived based on the CINR for the zone of RF = 1 is applied (that is, the correspondence of FIG. 6 is, for example, applied). With reference to FIG. 9, for example, the CINR of the frame number 1 is 3 dB, and therefore, the item 1 of FIG. 6 (CINR = 0.5 dB (< 3 dB)) is applied. As a result, QPSK (1/3) is applied, and the number of bits per symbol is 0.67. Therefore,

$$480 \ (symbols) \ \times \ 0.67 \ \approx \ 320 \ (bits).$$

Based on this calculation, according to the conventional technology, the total amount of data transmission for the 20 frames is 20,000 bits, as seen from FIG. 9 ("number of transmitted bits" under "conventional").

On the other hand, consider the case where the correspondence between CINRs and MCSs depicted in FIG. 7 is used according to the first embodiment of the present disclosure. For example, in FIG. 9, the CINR of the frame number 1 is 3 dB, and therefore, the item 3 of FIG. 7 (CINR = 2.5 dB (< 3 dB)) is applied. As a result, QPSK (2/3) is applied, and the number of bits per symbol is 1.33. Therefore,

$$480 \ (symbols) \ \times \ 1.33 \ \approx \ 640 \ (bits).$$

Based on this calculation, according to the present embodiment, the total amount of data transmission for 20 frames is 28,960 bits, as seen from FIG. 9 ("number of transmitted bits" under "present disclosure"). As a result,

$$\text{Throughput Improvement} = (28960) / (20000)$$

$$\approx 1.5 \ (\text{times}).$$

Thus, it can be understood that the present embodiment improves the throughput of data transmission.

Note that it is here assumed that MCSs are associated with CINRs in an optimal manner, and wireless link drops are not taken into account for the sake of simplification.

Consequently, according to the first embodiment, even if FFR is employed, it is possible to assign a mobile station to an optimal zone and determine an optimal MCS, whereby the throughput of data transmission is improved.

As has been described above, the first embodiment relates to a communication system employing FFR in which each base station performs data transmission in the full range of all available frequency band A during the zone of RF = 1 (i.e. T1 and T2 in FIGs. 5A-5C), and performs data transmission in a different one-third (B, C and D) of the frequency band A during the zone of RF = 3 (T3-1 and T3-2), as seen from FIGs. 5A-5C. The first embodiment is **characterized in that** the base station transmits control signals including a preamble for RF = 1 during the zone of RF = 1 (specifically, within T1) of a downstream wireless frame, and transmits control signals including a preamble for RF = 3 during the zone of RF = 3 (specifically, within T3-1). Then, a mobile station in the communication system measures the CINR based on the signals and embeds a measurement result in an upstream wireless frame to feed back the CINR value to the base station.

As described below in a second embodiment, the control signals including a preamble for RF = 1 and the control signals including a preamble for RF = 3 may be placed together at the beginning of the downstream wireless frame. Also in this case, as in the first embodiment, the control signals including a preamble for RF = 1 are transmitted in the full range of all available frequency band A as in the case of a corresponding data burst when RF = 1. In addition, the control signals are transmitted with the same transmission power (or transmission power increased by the amount corresponding to a predetermined offset) as for the corresponding data burst when RF = 1. In the same manner, the control signals including a preamble for RF = 3 are transmitted in a different one-third (B, C or D) of the full range of all available frequency band A as in the case of a corresponding data burst when RF = 3. In addition, the control signals are transmitted with the same transmission power (or transmission power increased by the amount corresponding to a predetermined offset) as for the corresponding data burst when RF = 3.

Note that the data transmission when RF = 1 and RF = 3 may be performed with the same transmission power, or alternatively, the data transmission when RF = 1 may be performed with less transmission power as compared to the data transmission when RF = 3.

As described below in a fifth embodiment, within a single downstream wireless frame, the control signals including a preamble for RF = 1 are transmitted during the zone of RF = 1 and the control signals including a preamble for RF = 3 are transmitted during the zone of RF = 3. In this case, in order to increase the data burst regions, the transmission cycle of the control signals including these preambles may be varied in view of the fading environment and the like. Base stations may transmit the preambles for RF = 1 and RF = 3 at the same time. In this case, the remaining control signals may be transmitted in each frame. Furthermore, at least one of the two preambles (e.g. the preamble transmitted in T1) may be transmitted in each frame.

As described below in a sixth embodiment, the control signals including a preamble for RF = 1 and the control signals including a preamble for RF = 3 may be placed together at the beginning of a downstream wireless frame. In this case, in order to increase the data burst regions, the transmission cycle of the control signals including these preambles may be varied in view of the fading environment and the like. Some wireless frames may include a preamble for RF = 1 but exclude a preamble for RF = 3, and other wireless frames may include a preamble for RF = 3 but exclude a preamble for RF = 1. In such a case, the control signals for RF = 1 and RF = 3, except for the preambles, may be transmitted in each frame.

Further detailed description of embodiments are given below.

As described above, according to the first embodiment, the base station transmits a preamble for a cell center (i.e. RF = 1) and a preamble for a cell edge (i.e. RF = 3). On receiving these preambles, the mobile station measures a CINR from each preamble. The measurement results are sent back to the base station as feedback, and the base station assigns the mobile station to a transmission zone and determines an applicable MCS based on the measurement results of both CINRs for the cell center and cell edge.

As illustrated in FIGs. 5A-5C, the control signals (FCH, DL-MAP and UL-MAP), except for the preamble, are transmitted in each of the zones RF = 1 and RF = 3.

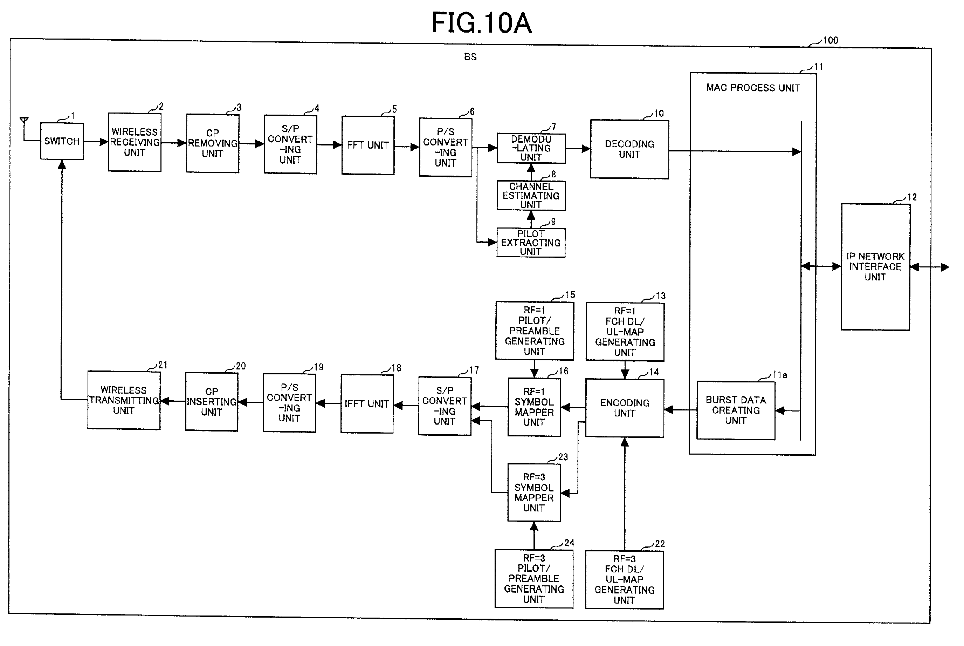

FIG. 10A shows a structural example of a base station 100 according to the first embodiment.

The base station 100 is a wireless base station used in an OFDMA wireless communications system employing FFR.

The base station 100 includes an antenna unit for transmitting and receiving wireless signals; a switch unit 1 for switching transmission and reception of signals; a wireless receiving unit 2 having a downconverter for amplifying a wireless signal and converting it into a baseband signal; a CP removing unit 3 for extracting and removing a CP from the baseband signal; an S/P converting unit 4 for converting a serial signal to a parallel signal in order to be subjected to an FFT process; an FFT process unit 5 for extracting data by subjecting an OFDMA signal to the FFT process; a P/S converting unit 6 for converting the output parallel signal into a serial signal; a pilot extracting unit 9 for extracting a pilot signal from the FFT-processed signal; a channel estimating unit 8 for estimating a propagation environment from the extracted pilot signal; a demodulating unit 7 for correcting and demodulating data using the propagation environment estimated by the channel estimating unit 8; and a decoding unit 10 for decoding the demodulated data.

The base station 100 further includes a MAC process unit 11 for converting the decoded data into MAC-PDU, MAC-SDU, IP packets and the like; an IP network interface unit 12 connected to an ASN-GW; a burst data creating unit 11a, included in the MAC process unit 11, for creating downstream and upstream burst mappings; an RF=1 FCH DL/UL-MAP generating unit 13 for generating an FCH signal, a DL-MAP signal and an UL-MAP signal for RF = 1; an RF=3 FCH DL/UL-MAP generating unit 22 for generating an FCH signal, a DL-MAP signal and an UL-MAP signal for RF = 3; an encoding unit 14 for encoding signals sent from the burst data creating unit 11a, RF=1 FCH DL/UL-MAP generating unit 13 and RF=3 FCH DL/UL-MAP generating unit 22; an RF=1 pilot/preamble generating unit 15 for generating a downstream pilot signal and a downstream preamble signal for RF = 1; and an RF = 3 pilot/preamble generating unit 24 for generating a downstream pilot signal and a downstream preamble signal for RF = 3.

The base station 100 further includes an RF=1 symbol mapper unit 16 for converting an encoded signal for RF = 1 and a signal from the RF=1 pilot/preamble generating unit 15 into symbols using an applicable MCS and mapping the converted symbols; an RF=3 symbol mapper unit 23 for converting an encoded signal for RF = 3 and a signal from the RF=3 pilot/preamble generating unit 24 into symbols using an applicable MCS and mapping the converted symbol; an S/P converting unit 17 for converting output signals obtained from the RF=1 and RF=3 symbol mapper units 16 and 23 from serial signals into parallel signals in order to be subjected to an IFFT process; an IFFT unit 18 for subjecting a signal to the IFFT process to convert it into an OFDMA signal; a P/S converting unit 19 for converting a parallel signal output from the IFFT unit 18 into a serial signal; a CP inserting unit 20 for inserting a CP; and a wireless transmitting unit 21 having an upconverter for converting a signal into a wireless signal and an amplifier.

The base station 100 is characterized by including the RF=3 FCH DL/UL-MAP generating unit 22, the RF=3 symbol mapper unit 23 and the RF=3 pilot/preamble generating unit 24, which generate control signals including a preamble, FCH, DL-MAP and UL-MAP for RF = 3.

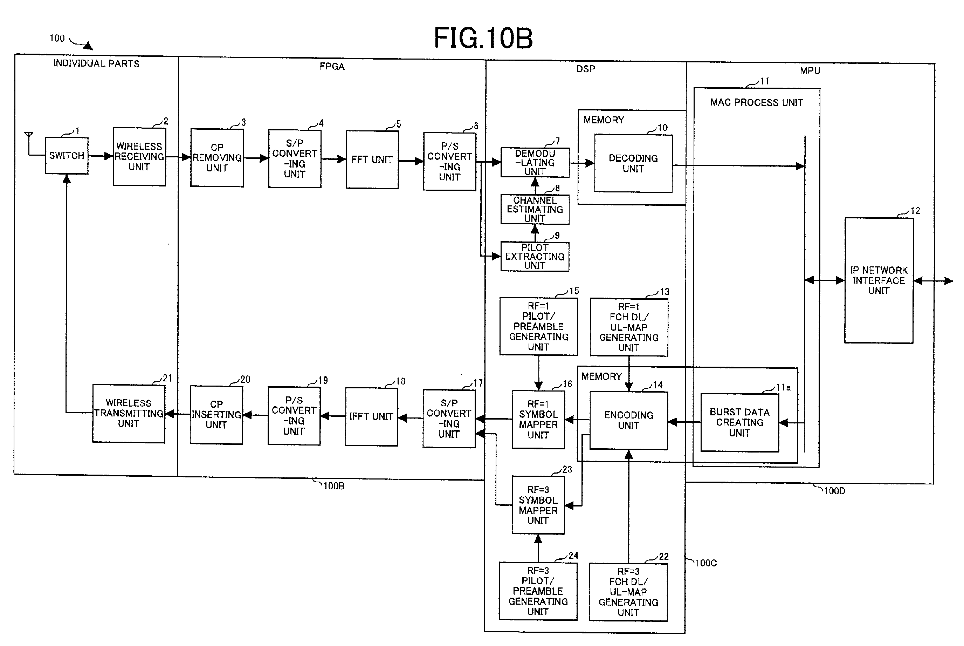

FIG. 10B shows a hardware block diagram of the base station 100 having the functional blocks depicted in FIG. 10A.

As illustrated in FIG. 10B, in the base station 100, the antenna unit, switch unit 1, wireless receiving unit 2 and wireless transmitting unit 21 are made of individual hardware devices. The CP removing unit 3, S/P converting units 4 and 17, FFT unit 5, P/S converting units 6 and 19, CP inserting unit 20 and IFFT unit 18 may be implemented by an FPGA (Field Programmable Gate Array) 100B, for example. The demodulating unit 7, channel estimating unit 8, pilot extracting unit 9, decoding unit 10, RF=1 pilot/preamble generating unit 15, RF=1 FCH DL/UL-MAP generating unit 13, RF=1 symbol mapper unit 16, RF=3 pilot/preamble generating unit 24, RF=3 FCH DL/UL-MAP generating unit 22, RF=3 symbol mapper unit 23 and encoding unit 14 may be implemented by a DSP (Digital Signal Processor) 100C, for example. The MAC process unit 11 and IP network interface unit 12 may be implemented by an MPU (MicroProcessor Unit) 100D, for example. The decoding unit 10, encoding unit 14 and burst data creating unit 11a are able to be incorporated in memory.

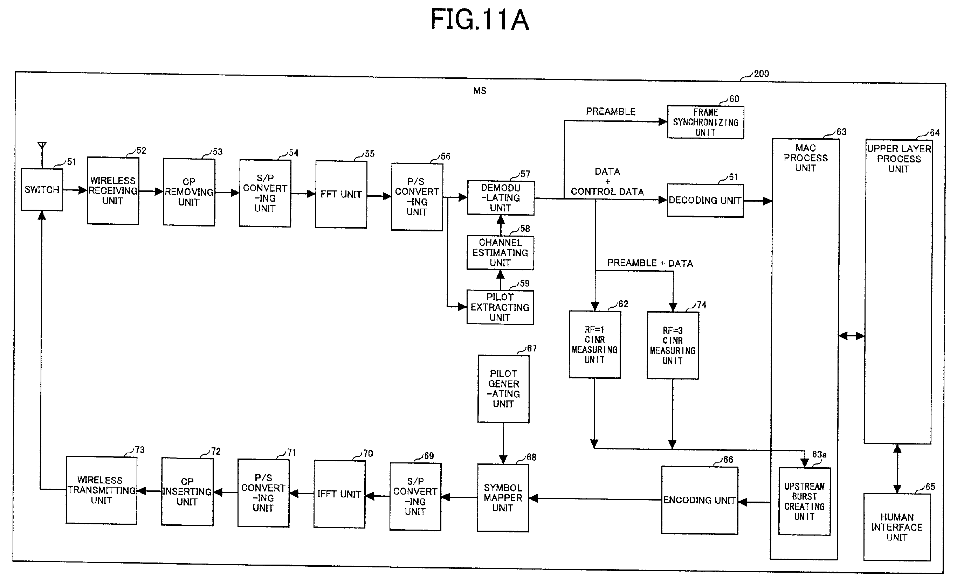

FIG. 11A is a functional block diagram of a mobile station 200 used to implement the first embodiment.

The mobile station 200 includes an antenna unit for transmitting and receiving wireless signals; a switch unit 51 for switching transmission and reception of signals; a wireless receiving unit 52 having a downconverter for amplifying a wireless signal and converting it into a baseband signal; a CP removing unit 53 for extracting and removing a CP from the baseband signal; an S/P converting unit 54 for converting a serial signal to a parallel signal in order to be subjected to an FFT process; an FFT process unit 55 for extracting data by subjecting an OFDMA signal to the FFT process; a P/S converting unit 56 for converting the output parallel signal into a serial signal; a pilot extracting unit 59 for extracting a pilot signal from the FFT-processed signal; a channel estimating unit 58 for estimating a propagation environment from the extracted pilot signal; and a demodulating unit 57 for correcting and demodulating data using the propagation environment estimated by the channel estimating unit 58.

The mobile station 200 further includes a decoding unit 61 for decoding the demodulated data; an MAC process unit 63 for converting the decoded data into MAC-PDU, MAC-SDU, IP packets and the like; a frame synchronizing unit 60 for synchronizing a wireless frame based on a preamble signal; an RF=1 CINR measuring unit 62 for measuring a CINR using a preamble for RF = 1 and data; an RF=3 CINR measuring unit 74 for measuring a CINR using a preamble for RF = 3 and data; an upstream burst creating unit 63a, included in the MAC process unit 63, for mapping the measured CINR values in a specified upstream burst; an upper layer process unit 64 for performing a process related to an upper layer above the MAC process unit 63; and a human interface unit 65 that provides an interface for connecting signals from, for example, keybuttons, a microphone, or a speaker of the mobile station 200 to the upper layer process unit 64.

The mobile station 200 further includes an encoding unit 66 for encoding a signal from the upstream burst creating unit 63a; a pilot signal generating unit 67 for generating an upstream pilot signal; a symbol mapper unit 68 for converting a signal from the encoding unit 66 and a pilot signal from the pilot generating unit 67 into symbols; an S/P converting unit 69 for converting an output signal obtained from the symbol mapper unit 68 from a serial signal into a parallel signal in order to be subjected to an IFFT process; an IFFT unit 70 for subjecting a signal to the IFFT process to convert it into an OFDMA signal; a P/S converting unit 71 for converting a parallel signal output from the IFFT unit 70 into a serial signal; a CP inserting unit 72 for inserting a CP; and a wireless transmitting unit 73 having an upconverter for converting a signal into a wireless signal and an amplifier.

According to the first embodiment, as described above, in a downstream communication from the base station 100, the control signals including a preamble for RF = 1 are placed in the zone of RF = 1 (i.e. specifically, in T1 out of T1 and T2 of FIGs. 5A-5C) within a single downstream sub-frame. Similarly, the control signals including a preamble for RF = 3 are placed in the zone of RF = 3 (i.e. specifically, in T3-1 out of T3-1 and T3-2 of FIGS. 5A-5C). After receiving these control signals, the mobile station 200 measures a CINR from each of the preambles for RF = 1 and RF = 3, and feeds back the measured CINR values to the base station 100 by including them in an upstream burst.

The mobile station 200 is particularly characterized by including the RF=3 CINR measuring units 74 to obtain the CINR measurement result for RF = 3; and the upstream burst creating unit 63a to feed back the RF=3 CINR measurement result together with the RF=1 CINR measurement result to the base station 100.

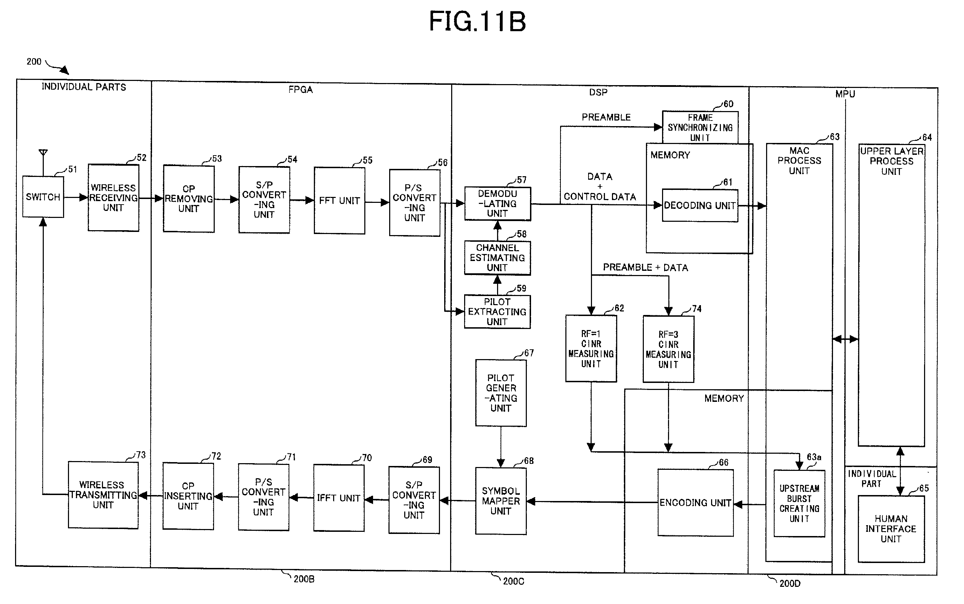

FIG. 11B shows a hardware block diagram of the mobile station 200 represented in FIG. 11A.

As illustrated in FIG. 11B, in the mobile station 200, the antenna unit, switch unit 51, wireless receiving unit 52, wireless transmitting unit 73 and human interface unit 65 are made of individual hardware devices. The CP removing unit 53, S/P converting units 54 and 69, FFT unit 55, P/S converting units 56 and 71, CP inserting unit 72 and IFFT unit 70 may be implemented by an FPGA 200B, for example. The demodulating unit 57, channel estimating unit 58, pilot extracting unit 59, decoding unit 61, RF=1 CINR measuring unit 62, RF=3 CINR measuring unit 74, encoding unit 66, pilot generating unit 67 and symbol mapper unit 68 may be implemented by a DSP 200C, for example. The MAC process unit 63 and upper layer process unit 64 may be implemented by an MPU 200D, for example. The decoding unit 61, encoding unit 66 and upstream burst data creating unit 63a are able to be incorporated in memory.

Note that the preambles and MAP information transmitted in T1 and T3-1 are broadcast, which can thereby be received by multiple mobile stations located within the cell of the base station.

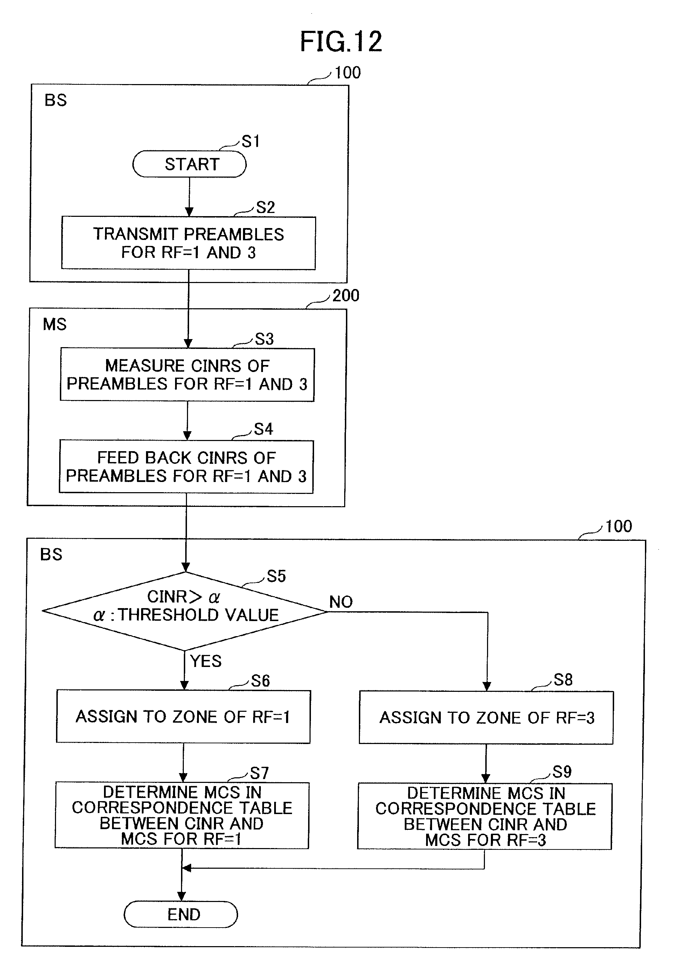

FIG. 12 is a flowchart for describing a process of the operation of the base station 100 and the mobile station 200 having the above-discussed structures.

The base station 100 illustrated in FIGS. 10A and 10B generates a pilot and a preamble for RF = 1 and a pilot and a preamble for RF = 3. The base station 100 also generates control information including FCH, DL-MAP and UL-MAP both for RF = 1 and RF = 3. The generated RF=3 control data are mapped in the zone of RF = 3 by the RF=3 symbol mapper unit 23. The mapped RF=3 data together with the RF=1 control data are converted into an OFDMA signal after going through the S/P converting unit 17, IFFT unit 18 and P/S converting unit 19. The CP inserting unit 20 inserts a CP into the OFDMA signal, which is converted into a wireless signal. The wireless signal is then transmitted from the transmitting antenna (Steps S1 and S2 in FIG. 12).

Next, after receiving at the wireless receiving unit 52 the wireless signal transmitted from the base station 100, the mobile station 200 removes the CP from the signal and converts the signal from a serial signal to a parallel signal. Then, the mobile station 200 performs the FFT process on the signal and divides it into signals of respective sub-carriers. Subsequently, both RF=1 preamble and RF=3 preamble are demodulated at the demodulating unit 57, and CINRs are measured from the preambles at the RF=1 and RF=3 CINR measuring units 62 and 74. The measured CINRs are sent to the upstream burst creating unit 63a, which maps the CINRs in upstream data. The CINRs included in the upstream data are then transmitted from the transmitting antenna of the mobile station 200 (Steps S3 and S4).

Next, the base station 100 receives the CINRs based on the preambles for RF = 1 and RF = 3 transmitted from the mobile station 200, and determines a zone for the mobile station 200 (i.e. either the zone of RF = 1 or the zone of RF = 3) and an applicable MCS (Steps S5 through S9).

One example of how the base station 100 assigns the mobile station to a zone is to use a threshold $\alpha$. That is, if the CINR of the preamble for RF = 1 is larger than the threshold $\alpha$ (Step S5: Yes), the base station 100 assigns the mobile station 200 to the zone of RF = 1 (Step S6). If the CINR of the preamble for RF = 1 is equal to or less than the threshold $\alpha$ (Step S5; No), the base station 100 assigns the mobile station to the zone of RF = 3 (Step S8). Regarding how to determine an applicable MCS, one example is to use the correspondence between CINRs and MCSs (Steps S7 and S9) described above with reference to FIGs. 6 and 7.

Note that the operation of the base station 100 is implemented when the CPU of the DSP 100C (illustrated in FIG. 10B) and the like in the base station 100 executes a program to cause the DSP 100C and the like to function accordingly. Similarly, the operation of the mobile station 200 is implemented when the CPU of the DSP 200C (illustrated in FIG. 11B) and the like in the mobile station 200 executes a program to cause the DSP 200C and the like to function accordingly.

According to the first embodiment of the present disclosure, as described above with reference to FIGs. 5A-5C, the preamble for RF = 1 and the preamble for RF = 3 are respectively placed at the beginning of each zone (i.e. in T1 out of T1 and T2 for RF = 1; and in T3-1 out of T3-1 and T3-2 for RF = 3), and are transmitted by being included in every wireless frame.

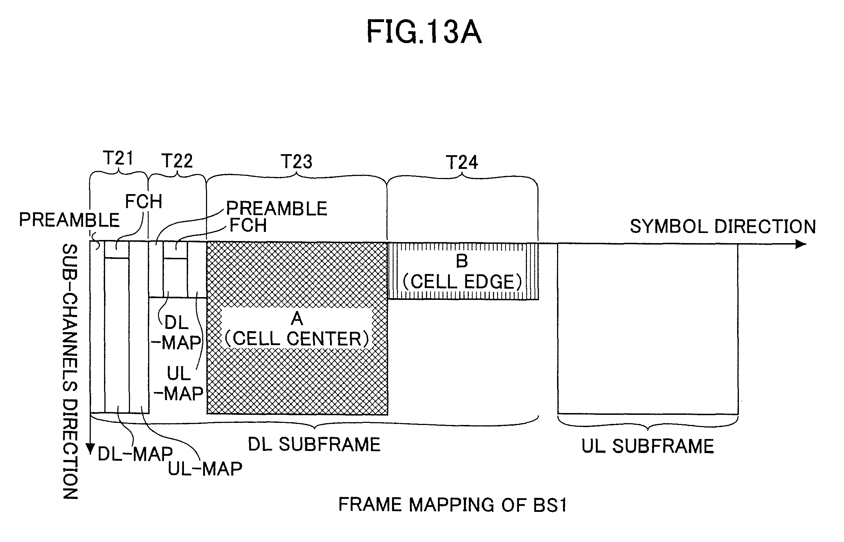

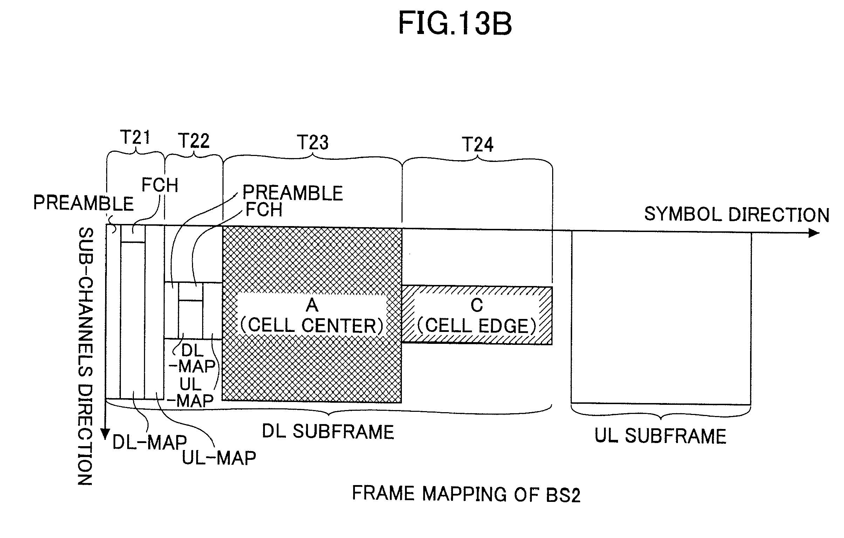

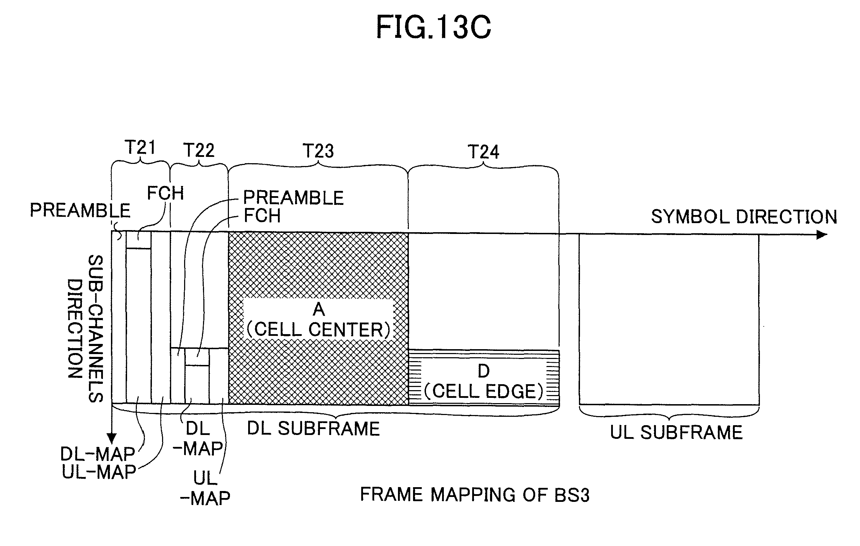

FIG. 13 is a diagram for explaining the second embodiment.

The second embodiment has the same structure and functions as those of the first embodiment above, and the following description focuses on a difference from the first embodiment.

According to the second embodiment, the preambles for RF = 1 and RF = 3 are placed together at the beginning of each wireless frame. Also in this case, as in the first embodiment, the control signals including the preamble for RF = 1 are transmitted using the full range of all available frequency band A, as in the case of a corresponding data burst when RF = 1. In addition, the control signals are transmitted with the same transmission power as for the corresponding data burst when RF = 1. In the same manner, the control signals including the preamble for RF = 3 are transmitted in a different one-third (B, C or D) of the full range of all available frequency band A, as in the case of a corresponding data burst when RF = 3. In addition, the control signals are transmitted with the same transmission power as for the corresponding data burst when RF = 3.

That is, as illustrated in each of FIGs. 13A through 13C, the preambles for RF = 1 and RF = 3 are transmitted in T21 and T22, respectively, before T23 for RF = 1 and T24 for RF = 3 during which actual data are transmitted (i.e. the data burst zones).

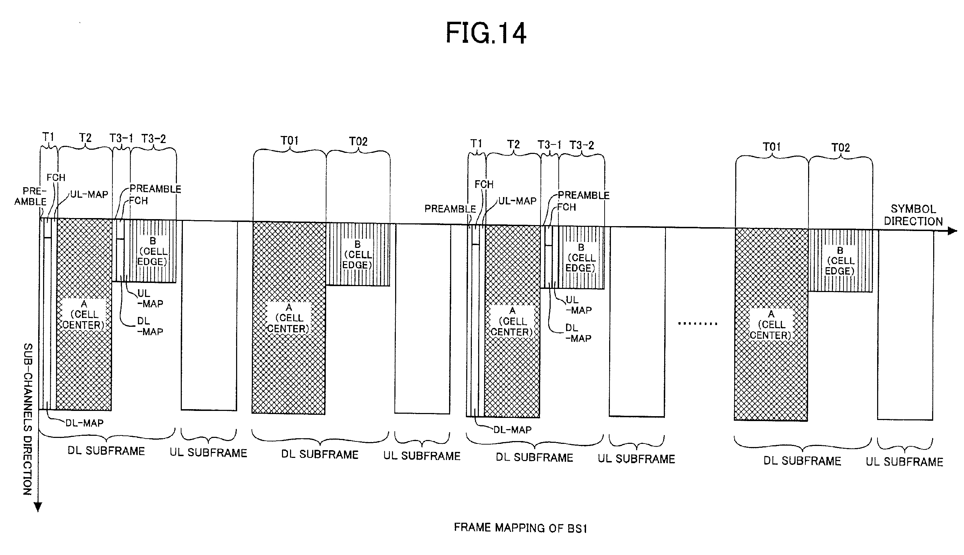

FIG. 14 is a diagram for explaining the third embodiment. For the sake of simplicity, FIG. 14 shows wireless frames of the base station BS1 only. The base stations BS2 and BS3 transmit similar wireless frames to those of the base station BS1, except for the frequency band used when RF = 3. Namely, the base station BS2 uses the frequency band C while BS3 uses the frequency band D. The frequency bands C and D when RF = 3 are as described above with reference to FIGs. 2A-2C and FIGs. 5A-5C.

The third embodiment has the same structure and functions as those of the first embodiment above, and the following description focuses on a difference from the first embodiment.

According to the third embodiment, the preambles for RF = 1 and RF = 3 are placed at the beginning of the respective zones (i.e. in T1 out of T1 and T2 for RF = 1; and in T3-1 out of T3-1 and T3-2 for RF = 3). In order to increase the data burst regions (the zones for transmitting actual data), the preambles for RF = 1 and RF = 3 are transmitted by being included periodically, for example, in every other wireless frame, instead of in every wireless frame.

In this case also, as in the first embodiment, the control signals including the preamble for RF = 1 are transmitted using the full range of all available frequency band A, as in the case of a corresponding data burst when RF = 1. In addition, the control signals are transmitted with the same transmission power as for the corresponding data burst when RF = 1. In the same manner, the control signals including a preamble for RF = 3 are transmitted in a different one-third (B, C or D) of the full range of all available frequency band A, as in the case of a corresponding data burst when RF = 3. In addition, the control signals are transmitted with the same transmission power as used for the corresponding data burst when RF = 3.

That is, as illustrated in FIG. 14, the control signals for RF = 1 are placed in T1 of the first wireless frame, which is followed by T2, a zone of RF = 1 during which actual data are transmitted (i.e. a data burst zone). Subsequently, the control signals for RF = 3 are placed in T3-1, which is followed by T3-2, a zone of RF = 3 during which actual data are transmitted (a data burst zone). In the second wireless frame, T01, a zone of RF = 1 during which actual data are transmitted (a data burst zone) is placed in the first half, and then T02, a zone of RF = 3 during which actual data are transmitted (a data burst zone) is placed in the second half. The combination of these wireless frames is sequentially repeated.

In the case of the third embodiment, since the control signals including preambles for CINR measurements are included in every other wireless frame, a wireless frame not including the control signals is transmitted once every two wireless frames. For the wireless frame having no control signals, due to there being no need of the control signals, it is possible to provide larger data burst regions.

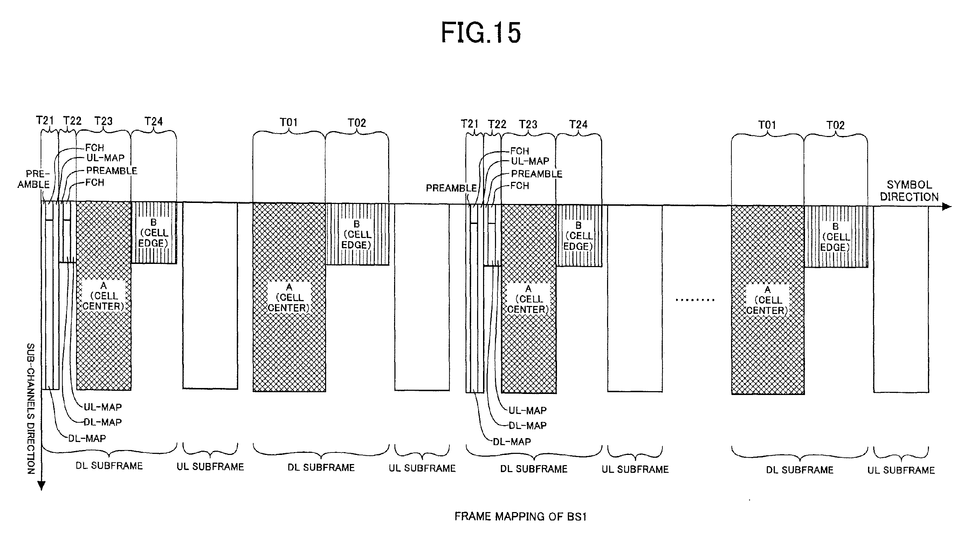

FIG. 15 is a diagram for explaining the fourth embodiment. As in the case of FIG. 14, FIG. 15 shows wireless frames of the base station BS1 only. The base stations BS2 and BS3 transmit similar wireless frames to those of the base station BS1, except for the frequency band used for RF = 3. The frequency bands C and D for RF = 3 are as described above with reference to FIGs. 2A-2C and FIGs. 5A-5C.

The fourth embodiment has the same structure and functions as those of the first embodiment above, and the following description focuses on a difference from the first embodiment.

According to the fourth embodiment, the preambles for RF = 1 and RF = 3 are placed together at the beginning of a wireless frame. In order to increase the data burst regions, the preambles for RF = 1 and RF = 3 are transmitted by being included periodically, for example, in every other wireless frame, instead of in every wireless frame.

In this case also, as in the first embodiment, the control signals including a preamble for RF = 1 are transmitted using the full range of all available frequency band A, as in the case of a corresponding data burst when RF = 1. In addition, the control signals are transmitted with the same transmission power as for the corresponding data burst when RF = 1. In the same manner, the control signals including a preamble for RF = 3 are transmitted in a different one-third (B, C or D) the full range of all available frequency band A, as in the case of a corresponding data burst when RF = 3. In addition, the control signals are transmitted with the same transmission power as for the corresponding data burst when RF = 3.

As illustrated in FIG. 15, in the first wireless frame, the preambles for RF = 1 and RF = 3 are placed in T21 and T22, respectively, before T23 for RF = 1 and T24 for RF = 3 during which actual data are transmitted (i.e. the data burst zones). In the second wireless frame, T01, a zone of RF = 1 during which actual data are transmitted (a data burst zone) is placed in the first half, and then T02, a zone of RF = 3 during which actual data are transmitted (a data burst zone) is placed in the second half. The combination of these wireless frames is sequentially repeated.

In the case of the fourth embodiment as in the third embodiment, since the control signals including preambles for CINR measurements are included in every other wireless frame, a wireless frame not including the control signals is transmitted once every two wireless frames. For the wireless frame having no control signals, due to there being no need of the control signals, it is possible to provide larger data burst regions.

Next is described the fifth embodiment.

The fifth embodiment has the same structure and functions as those of the first embodiment above, and the following description focuses on a difference from the first embodiment.

According to the fifth embodiment, as in the third embodiment, the preambles for RF = 1 and RF = 3 are placed at the beginning of the respective zones. In order to increase the data burst regions, the transmission cycle of the control signals including these preambles may be varied in view of the fading environment and the like. In the case where the fading environment changes rapidly, the preambles for RF = 1 and RF = 3 are included in every wireless frame. On the other hand, the environment remains unchanged, the preambles for RF = 1 and RF = 3 are transmitted periodically, for example, once every ten wireless frames.

In order to evaluate the fading environment, for example, an average X of CINRs measured by the mobile station 200 and a standard deviation σ can be used. If the quotient (σ/X) is large, the fading variation is considered fast, and thus the preambles for RF = 1 and RF = 3 may be included in every wireless frame. On the other hand, if the quotient (σ/X) is small, the fading variation is considered slow, and thus the preambles for RF = 1 and RF = 3 may be transmitted once every ten wireless frames.

Next is described the sixth embodiment.

The sixth embodiment has the same structure and functions as those of the first embodiment above, and the following description focuses on a difference from the first embodiment.

According to the sixth embodiment, as in the fourth embodiment, the preambles for RF = 1 and RF = 3 are placed together at the beginning of a wireless frame. In order to increase the data burst regions, the transmission cycle of the control signals including these preambles may be varied in view of the fading environment and the like. In the case where the fading environment changes rapidly, the preambles for RF = 1 and RF = 3 are included in every wireless frame. On the other hand, the environment remains unchanged, the preambles for RF = 1 and RF = 3 are transmitted periodically, for example, once every ten wireless frames.

In this case also, in order to evaluate the fading environment, for example, an average X of CINRs measured by the mobile station 200 and a standard deviation σ can be used. If the quotient (σ/X) is large, the fading variation is considered fast, and thus the preambles for RF = 1 and RF = 3 may be included in every wireless frame. On the other hand, if the quotient (σ/X) is small, the fading variation is considered slow, and thus the preambles for RF = 1 and RF = 3 may be transmitted once every ten wireless frames.

All examples and conditional language used herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiment of the present invention has been described in detail, it should be understood that various changes, substitutions, and alterations could be made hereto without departing from the spirit and scope of the invention.

**Claims**

1. A base station for transmitting data at a same frequency used by neighboring base stations during a first time period, and transmitting data at a different frequency from frequencies used by the neighboring base stations during a second time period, the base station comprising:

    an antenna; and
    a transmitting unit configured to transmit a first known sequence from the antenna during the first time period and transmit a second known sequence from the antenna during the second time period.

2. The base station as claimed in claim 1, further comprising: a receiving unit configured to receive a measurement result from a mobile station after the mobile station measures reception qualities of the first known sequence and the second known sequence.

3. The base station as claimed in claim 2, further comprising: a control unit configured to determine either the first time period or the second time period as a time period during which the data are transmitted to the mobile station.

4. A known sequence transmission method used in a wireless communication apparatus that includes an antenna, and transmits data at a same frequency used by neighboring base stations during a first time period and transmits data at a different frequency from frequencies used by the neighboring base stations during a second time period, the known sequence transmission method comprising the steps of:

transmitting a first known sequence from the antenna during the first time period; and
transmitting a second known sequence from the antenna during the second time period.

5. The known sequence transmission method as claimed in claim 4, further comprising the step of: receiving a measurement result from a mobile station after the mobile station measures reception qualities of the first known sequence and the second known sequence.

6. The known sequence transmission method as claimed in claim 5, further comprising the step of: determining either the first time period or the second time period as a time period during which the data are transmitted to the mobile station.

# FIG.1

# FIG.2A

FRAME MAPPING OF BS1

EP 2 086 274 A2

# FIG.2B

SYMBOL DIRECTION

T1  T2  T3

PREAMBLE  FCH

SUB-CHANNELS DIRECTION

A
(CELL CENTER)

C
(CELL EDGE)

DL-MAP
UL-MAP

DL SUBFRAME

UL SUBFRAME

FRAME MAPPING OF BS2

EP 2 086 274 A2

# FIG.2C

FRAME MAPPING OF BS3

EP 2 086 274 A2

FIG.3

FIG.4

# FIG.5A

SUB-CHANNELS DIRECTION

SYMBOL DIRECTION

T1  T2  T3-1  T3-2

PREAMBLE  FCH  PREAMBLE  FCH

A (CELL CENTER)

B (CELL EDGE)

DL-MAP  UL-MAP

DL-MAP  UL-MAP

DL SUBFRAME  UL SUBFRAME

FRAME MAPPING OF BS1

EP 2 086 274 A2

# FIG.5B

FRAME MAPPING OF BS2

# FIG.5C

FRAME MAPPING OF BS3

EP 2 086 274 A2

# FIG.6

AWGN, BER=$10^{-3}$

| ITEM | MCS | FEC RATE | CINR[dB] | BITS/SYMBOL |
|------|------|----------|----------|-------------|
| 1 | QPSK | 1/3 | 0.5 | 0.67 |
| 2 | | 1/2 | 6 | 1.00 |
| 3 | | 2/3 | 7.5 | 1.33 |
| 4 | | 3/4 | 9 | 1.50 |
| 5 | 16QAM | 1/2 | 12 | 2.00 |
| 6 | | 2/3 | 14.5 | 2.67 |
| 7 | | 3/4 | 15 | 3.00 |
| 8 | | 5/6 | 17.5 | 3.33 |
| 9 | 64QAM | 1/2 | 18 | 3.00 |
| 10 | | 2/3 | 20 | 4.00 |
| 11 | | 3/4 | 21 | 4.50 |
| 12 | | 5/6 | 23 | 5.00 |

EP 2 086 274 A2

## FIG.7

AWGN, BER=$10^{-3}$
(OFFSET VALUE WHEN COMPARED TO RF=1 = −5[dB])

| ITEM | MCS | FEC RATE | CINR[dB] | BITS/SYMBOL |
|------|-------|----------|----------|-------------|
| 1 | QPSK | 1/3 | −4.5 | 0.67 |
| 2 | | 1/2 | 1 | 1.00 |
| 3 | | 2/3 | 2.5 | 1.33 |
| 4 | | 3/4 | 4 | 1.50 |
| 5 | 16QAM | 1/2 | 7 | 2.00 |
| 6 | | 2/3 | 9.5 | 2.67 |
| 7 | | 3/4 | 10 | 3.00 |
| 8 | | 5/6 | 12.5 | 3.33 |
| 9 | 64QAM | 1/2 | 13 | 3.00 |
| 10 | | 2/3 | 15 | 4.00 |
| 11 | | 3/4 | 16 | 4.50 |
| 12 | | 5/6 | 18 | 5.00 |

EP 2 086 274 A2

# FIG.8

FRAME MAPPING OF BS1

EP 2 086 274 A2

# FIG.9

| FRAME NUMBER | CINR [dB] | CONVENTIONAL | | PRESENT DISCLOSURE | |
|---|---|---|---|---|---|
| | | MCS | NUMBER OF TRANSMITTED BITS | MCS | NUMBER OF TRANSMITTED BITS |
| 1 | 3 | Q(1/3) | 320.00 | Q(2/3) | 640.00 |
| 2 | 5 | Q(1/3) | 320.00 | Q(3/4) | 720.00 |
| 3 | 8 | Q(2/3) | 640.00 | 16Q(1/2) | 960.00 |
| 4 | 12 | 16Q(1/2) | 960.00 | 16Q(3/4) | 1440.00 |
| 5 | 18 | 64Q(1/2) | 1440.00 | 64Q(5/6) | 2400.00 |
| 6 | 15 | 16Q(3/4) | 1440.00 | 64Q(2/3) | 1920.00 |
| 7 | 12 | 16Q(1/2) | 960.00 | 16Q(3/4) | 1440.00 |
| 8 | 0 | N/A | 0.00 | Q(1/3) | 320.00 |
| 9 | −3 | N/A | 0.00 | Q(1/3) | 320.00 |
| 10 | −10 | N/A | 0.00 | N/A | 0.00 |
| 11 | 0 | N/A | 0.00 | Q(1/3) | 320.00 |
| 12 | 10 | Q(3/4) | 720.00 | 16Q(3/4) | 1440.00 |
| 13 | 11 | Q(3/4) | 720.00 | 16Q(3/4) | 1440.00 |
| 14 | 13 | 16Q(1/2) | 960.00 | 64Q(1/2) | 1440.00 |
| 15 | 16 | 16Q(3/4) | 1440.00 | 64Q(3/4) | 2160.00 |
| 16 | 18 | 64Q(1/2) | 1440.00 | 64Q(5/6) | 2400.00 |
| 17 | 23 | 64Q(5/6) | 2400.00 | 64Q(5/6) | 2400.00 |
| 18 | 28 | 64Q(5/6) | 2400.00 | 64Q(5/6) | 2400.00 |
| 19 | 20 | 64Q(2/3) | 1920.00 | 64Q(5/6) | 2400.00 |
| 20 | 19 | 64Q(2/3) | 1920.00 | 64Q(5/6) | 2400.00 |
| | | TOTAL | 20000.00 | | 28960.00 |

# FIG.10A

FIG.10B

# FIG.11A

FIG.11A — Block diagram of MS (200) including: SWITCH (51), WIRELESS RECEIVING UNIT (52), CP REMOVING UNIT (53), S/P CONVERTING UNIT (54), FFT UNIT (55), P/S CONVERTING UNIT (56), DEMODULATING UNIT (57), CHANNEL ESTIMATING UNIT (58), PILOT EXTRACTING UNIT (59), FRAME SYNCHRONIZING UNIT (60), DECODING UNIT (61), RF=1 CINR MEASURING UNIT (62), RF=3 CINR MEASURING UNIT (74), MAC PROCESS UNIT (63), UPSTREAM BURST CREATING UNIT (63a), UPPER LAYER PROCESS UNIT (64), HUMAN INTERFACE UNIT (65), ENCODING UNIT (66), PILOT GENERATING UNIT (67), SYMBOL MAPPER UNIT (68), S/P CONVERTING UNIT (69), IFFT UNIT (70), P/S CONVERTING UNIT (71), CP INSERTING UNIT (72), WIRELESS TRANSMITTING UNIT (73). Signals: PREAMBLE, DATA + CONTROL DATA, PREAMBLE + DATA.

# FIG.11B

200

| INDIVIDUAL PARTS | FPGA | DSP | MPU |

SWITCH (51)

WIRELESS RECEIVING UNIT (52)

CP REMOVING UNIT (53)

S/P CONVERT-ING UNIT (54)

FFT UNIT (55)

P/S CONVERT-ING UNIT (56)

DEMODU-LATING UNIT (57)

CHANNEL ESTIMATING UNIT (58)

PILOT EXTRACTING UNIT (59)

PREAMBLE

FRAME SYNCHRONIZING UNIT (60)

MEMORY

DECODING UNIT (61)

DATA + CONTROL DATA

PREAMBLE + DATA

RF=1 CINR MEASURING UNIT (62)

RF=3 CINR MEASURING UNIT (74)

PILOT GENER-ATING UNIT (67)

MAC PROCESS UNIT (63)

UPPER LAYER PROCESS UNIT (64)

MEMORY

WIRELESS TRANSMITTING UNIT (73)

CP INSERTING UNIT (72)

P/S CONVERT-ING UNIT (71)

IFFT UNIT (70)

S/P CONVERT UNIT (69)

SYMBOL MAPPER UNIT (68)

ENCODING UNIT (66)

UPSTREAM BURST CREATING UNIT (63a)

INDIVIDUAL PART

HUMAN INTERFACE UNIT (65)

200B

200C

200D

EP 2 086 274 A2

29

# FIG.12

```
┌─────────────────────────────────────────── ╭─100
│  BS                                          
│              ╭─S1
│         ┌ START ┐
│              │
│              ▼          ╭─S2
│     ┌────────────────────────┐
│     │  TRANSMIT PREAMBLES    │
│     │  FOR RF=1 AND 3        │
│     └────────────────────────┘
└─────────────────────────────────────────────
              │
┌─────────────────────────────────────────── ╭─200
│  MS         │
│             ▼           ╭─S3
│     ┌────────────────────────┐
│     │  MEASURE CINRS OF      │
│     │  PREAMBLES FOR RF=1 AND 3 │
│     └────────────────────────┘
│             │
│             ▼           ╭─S4
│     ┌────────────────────────┐
│     │  FEED BACK CINRS OF    │
│     │  PREAMBLES FOR RF=1 AND 3 │
│     └────────────────────────┘
└─────────────────────────────────────────────
              │
```

CINR > α
α : THRESHOLD VALUE

S5

NO

YES

ASSIGN TO ZONE OF RF=1

S6

ASSIGN TO ZONE OF RF=3

S8

DETERMINE MCS IN
CORRESPONDENCE TABLE
BETWEEN CINR AND
MCS FOR RF=1

S7

DETERMINE MCS IN
CORRESPONDENCE TABLE
BETWEEN CINR AND
MCS FOR RF=3

S9

END

BS

100

30

# FIG.13A

FRAME MAPPING OF BS1

EP 2 086 274 A2

# FIG.13B

SYMBOL DIRECTION

UL SUBFRAME

T24

C (CELL EDGE)

T23

PREAMBLE
FCH

A (CELL CENTER)

T22

DL-MAP
UL-MAP

T21

FCH

PREAMBLE

DL SUBFRAME

DL-MAP UL-MAP

SUB-CHANNELS DIRECTION

FRAME MAPPING OF BS2

# FIG.13C

FRAME MAPPING OF BS3

EP 2 086 274 A2

# FIG.14

FRAME MAPPING OF BS1

# FIG.15

FRAME MAPPING OF BS1

EP 2 086 274 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008024283 A
- JP 10186944 H
- JP 2006074325 A